# EUROPEAN PATENT APPLICATION

(11) **EP 4 661 476 A1**
(43) Date of publication of application: **10.12.2025**
(21) Application number: 24807414.8
(22) Date of filing: 07.05.2024
(51) Int. Cl.: H04W 24/08, H04W 24/02, H04W 36/00, H04L 65/1016, H04W 8/02, H04W 64/00, H04W 24/10

(54) **METHOD FOR IMPROVING CALL QUALITY AND ELECTRONIC DEVICE THEREOF IN WIRELESS COMMUNICATION SYSTEM**

(30) Priority: 12.05.2023 KR 20230061772; 01.06.2023 KR 20230071066
(71) Applicant: Samsung Electronics Co., Ltd., Suwon-si, Gyeonggi-do 16677 (KR)
(72) Inventor: TRUONG, Van Hau, Hanoi, 124000 (VN); HOANG, Minh Duc, Hanoi, 124000 (VN); NGUYEN, Van Hung, Hanoi, 124000 (VN); NGUYEN, The Thoi, Hanoi, 124000 (VN)
(74) Representative: Nederlandsch Octrooibureau
(86) International application number: PCT/KR2024/006080
(87) International publication number: WO 2024/237537

(57) **Abstract**

There is provided a method for enhancing quality of calls in a wireless communication system. The method includes: receiving a new radio (NR) measurement setup from a network while connecting an IP multimedia subsystem (IMS)-based voice call with an external terminal; based on the network not supporting voice over new radio (VoNR) and supporting a standalone (SA) mode and a non-standalone (NSA) mode, determining whether a frequency set by the NR measurement setup is usable and determining a network type of the set frequency; and, based on determining that the set frequency is used for the SA mode, blocking measurement on the set frequency.

## Description

### [Technical Field]

The disclosure relates to a method for enhancing quality of calls in a wireless communication system and an electronic device thereof.

### [Background Art]

5G mobile communication technology defines a broad frequency band so as to enable a high transmission speed and new service, and may be implemented not only in a frequency band ('Sub 6GHz) of 6 GHz or less such as 3.5 gigahertz (3.5 GHz) but also in a superhigh frequency band ('Above 6 GHz') which is called millimeter wave (mmWave) such as 28 GHz and 39 GHz. In addition, in the case of 6G mobile communication technology which is called a system of 'beyond 5G', it is considered that 6G mobile communication technology is implemented in a terahertz (THz) band (for example, 3 terahertz band at 95 GHz) in order to achieve a transmission speed 50 times faster than in 5G mobile communication technology and ultra-low latency that is reduced by 1/10 compared to 5G mobile communication technology.

At the early stage of 5G mobile communication technology, with the aim of supporting service for enhanced mobile broadband (eMBB), ultra-reliable low-latency communications (URLLC), massive machine-type communications (mMTC) and satisfying performance requirements, standards were defined for beamforming and massive MIMO for mitigating a path loss of radio waves in an ultra-high frequency band and increasing a transmission distance of radio waves, support of various numerologies for effective use of ultra-high frequency resources (management of a plurality of sub-carrier spacings, etc.), and dynamic management of a slot format, initial access technology for supporting multi-beam transmission and broadband, definition and management of a bandwidth part, new channel coding method such as low density parity check (LDPC) encoding for high-capacity data transmission and a polar code for transmitting control information with high reliability, L2 pre-processing, network slicing for providing a dedicated network which is specialized for a specific service.

Currently, considering services that 5G mobile communication technology supports, discussions are ongoing on improvement of 5G mobile communication technology at the early stage and performance enhancement, and physical layer standardization is underway for various technologies, such as vehicle-to-everything (V2X) for assisting in determining traveling of an autonomous vehicle based on a location and state information that a vehicle transmits, and enhancing user convenience, new radio unlicensed (NR-U) for operating a system according to requirements on various regulations in an unlicensed band, NR terminal low-power consumption technology (UE-power saving), a non-terrestrial network (NTN) which is terminal-satellite direction communication for ensuring a coverage in a region where communication with a terrestrial network is impossible, positioning, etc.

In addition, standardization in wireless interface architecture/protocol field regarding technologies, such as industrial Internet of Things (IIoT) for supporting new service through association and merging with other industries, integrated access and backhaul (IAB) for supporting integration of wireless backhaul link and access link and providing a node for expanding a network service region, mobility enhancement including conditional handover and dual active protocol stack (DAPS) handover, 2-step RACH for NR for simplifying a random access procedure, is underway. Standardization in the field of system architecture/service for a 5G baseline architecture (for example, a service-based architecture, a service-based interface) for integrating network functions virtualization (NVF) and software-defined networking (SDN), mobile edge computing (MEC) for receiving service based on a position of UE is in progress.

As 5G mobile communication systems described above are commercialized, connected devices which are explosively increasing may be connected to a communication network, and accordingly, it is expected that enhancing functions and performance of a 5G mobile communication system, and integrated management of connected devices will be necessary. To achieve this, new researches on extended reality (XR) for efficiently supporting augmented reality (AR), virtual reality (VR), mixed reality (MR), etc., enhancement of 5G performance and reduction of complexity using artificial intelligence (AI) and machine learning (ML), AI service support, metaverse service support, drone communication, etc. will be conducted.

In addition, the development of such 5G mobile communication systems may become the basis for the development of multi-antenna transmission technology such as new waveform for guaranteeing a coverage in a terra-hertz band of 6G mobile communication technology, full dimensional MIMO (FD-MIMO), array antenna, large scale antenna, high-dimensional space multiplexing technology using a metamaterial-based lens and an antenna, orbital angular momentum for enhancing a coverage of a terra-hertz band signal, reconfigurable intelligent surface (RIS) technology, as well as full duplex technology for improving frequency efficiency and enhancing system network of 6G mobile communication technology, AI-based communication technology which utilizes a satellite, artificial intelligence (AI) at the step of designing, and internalizes an end-to-end AI support function to realize system optimization, next-generation distributed computing technology for realizing service of complexity beyond the limitation to UE computing capability using high-performance communication and computing resources.

Meanwhile, in a wireless communication system such as a 5G mobile communication system, two types of modes may be used: a non-standalone (NSA) mode in which an LTE network and a 5G network are merged and used; and a standalone (SA) mode in which only a 5G network is independently used without interlocking with LTE. In the NSA mode, a network may provide a 5G service to user equipment by adding a 5G NSA cell to an E-UTRA new radio dual connectivity (ENDC) cell. In the SA mode, a network may provide a 5G service by allowing user equipment to perform handover from an LTE cell to a 5G SA cell. If a network operator does not support 5G-based voice calls (for example, voice of new radio (VoNR)) in a 5G SA mode in a wireless communication system, when handover to a 5G SA cell is performed during a 4G-based voice call (for example, voice over long term evolution (VoLTE)), the call may be dropped and 5G cell measurement is blocked during the 4G-based voice call, and accordingly, a 5G NSA service may be interrupted. To address these problems, quality of calls may be enhanced by preventing/reducing sudden handover to a 5G SA cell during a 4G-based voice call, and preventing or blocking unnecessary 5G cell measurement.

### [Disclosure of Invention]

### [Solution to Problem]

According to various example embodiments of the disclosure, a method for enhancing quality of calls in a wireless communication system may include: receiving a new radio (NR) measurement setup from a network while connecting an IP multimedia subsystem (IMS)-based voice call with an external terminal; based on the network not supporting voice over new radio (VoNR) and supporting a standalone (SA) mode and a non-standalone (NSA) mode, determining whether a frequency set by the NR measurement setup is usable and determining a network type of the set frequency; and, based on determining that the set frequency is used for the SA mode, blocking measurement on the set frequency.

According to various example embodiments of the disclosure, an apparatus for enhancing quality of calls in a wireless communication system may include: a transceiver; and at least one processor, comprising processing circuitry, operatively connected with the transceiver. At least one processor, individually and/or collectively, may be configured to: receive a new radio (NR) measurement setup from a network while connecting an IP multimedia subsystem (IMS)-based voice call with an external terminal; based on the network not supporting voice over new radio (VoNR) and supporting a standalone (SA) mode and a non-standalone (NSA) mode, determine whether a frequency set by the NR measurement setup is usable and determine a network type of the set frequency; and, based on determining that the set frequency is used for the SA mode, block measurement on the set frequency.

### [Brief Description of Drawings]

The above and other aspects, features and advantages of certain embodiments of the present disclosure will be more apparent from the following detailed description, taken in conjunction with the accompanying drawings, in which:
FIG. 1 is a block diagram illustrating an example electronic device in a network environment according to various embodiments;
FIG. 2 is a block diagram illustrating an example configuration of an electronic device which supports legacy network communication and 5G network communication according to various embodiments;
FIG. 3 is a diagram illustrating an NSA mode and a SA mode of a 5G network according to various embodiments;
FIG. 4A is a diagram illustrating information regarding network types which are supported by band/frequency of a network according to various embodiments;
FIG. 4B is a diagram illustrating information regarding whether a VoNR/SA mode/NSA mode of a network is supported according to various embodiments;
FIG. 5 is a flowchart illustrating an example method for enhancing quality of calls in a wireless communication system according to various embodiments;
FIG. 6 is a signal flow diagram illustrating an example method for processing a measurement setup received from a network according to various embodiments;
FIG. 7 is a flowchart illustrating an example method for enhancing quality of calls by blocking SA frequency measurement based on an NR report type included in a NR measurement setup in a wireless communication system according to various embodiments;
FIG. 8 is a diagram illustrating an example method of identifying an NR report type from a radio resource control (RRC) message according to various embodiments; and
FIG. 9 is a flowchart illustrating an example method for enhancing quality of calls by blocking SA frequency measurement when a handover command is received in a wireless communication system according to various embodiments.

Regarding explanation of the drawings, the same or similar reference numerals may be used for the same or similar components.

### [Mode for the Invention]

Hereinafter, various example embodiments of the disclosure will be described with reference to the accompanying drawings. It should be appreciated that various embodiments of the disclosure are not intended to limit the technological features set forth herein to particular embodiments and include various modifications, equivalents, and/or alternatives of the disclosure.

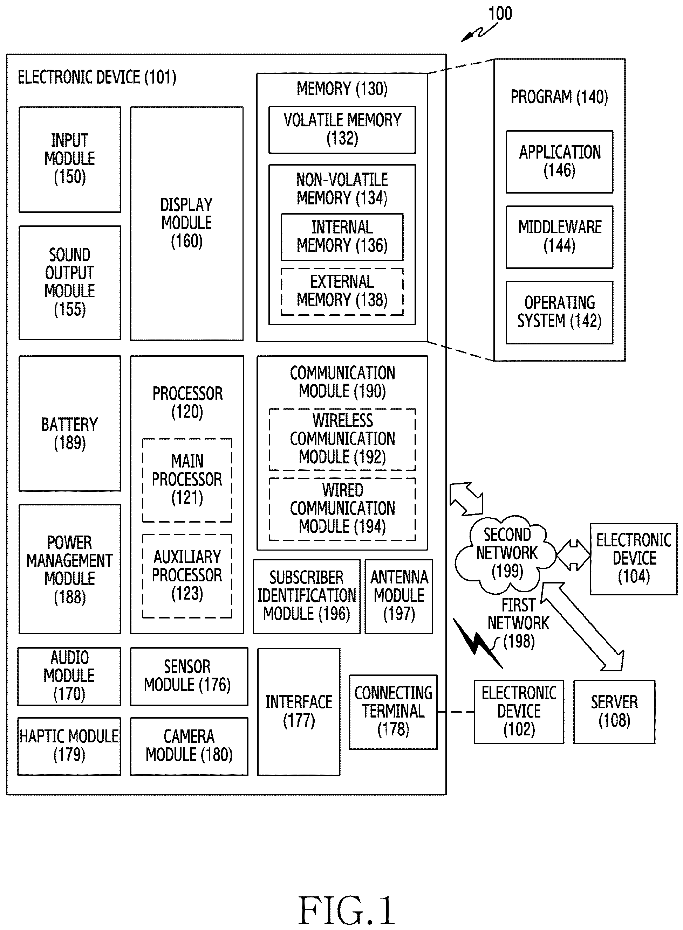

FIG. 1 is a block diagram illustrating an example electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

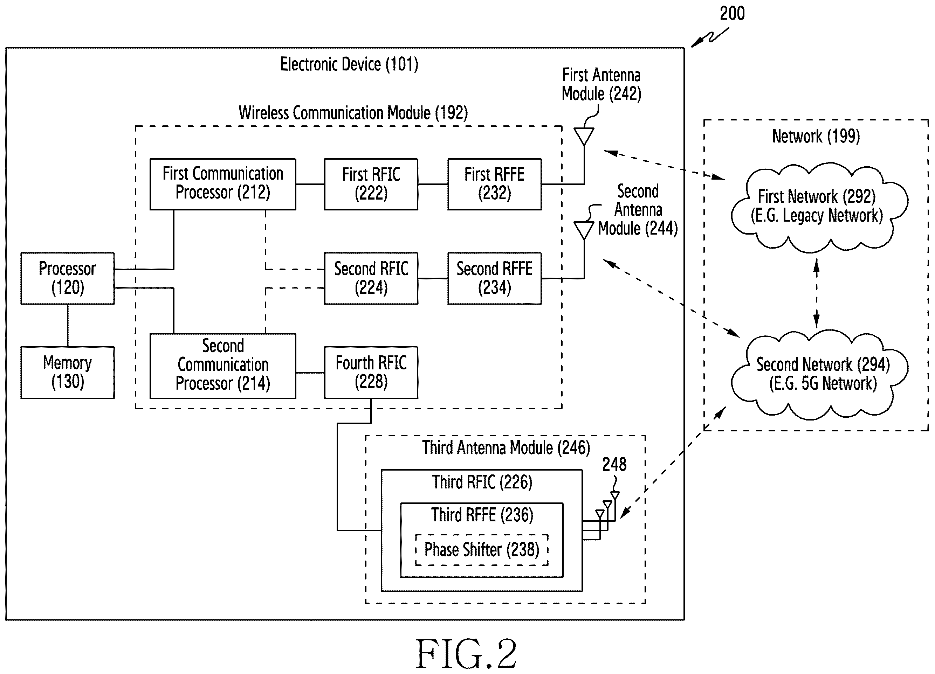

FIG. 2 is a block diagram 200 illustrating an example configuration of an electronic device 101 for supporting legacy network communication and 5G network communication according to various embodiments. Referring to FIG. 2, the electronic device 101 may include a first communication processor (e.g., including processing circuitry) 212, a second communication processor (e.g., including processing circuitry) 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may further include a processor (e.g., including processing circuitry) 120 and a memory 130. A network 199 may include a first cellular network 292 and a second cellular network 294. According to an embodiment, the electronic device 101 may further include at least one of the components illustrated in FIG. 1, and the network 199 may further include at least one other network. According to an embodiment, the first communication processor 212, the second communication processor 214, the first RFIC 222, the second RFIC 224, the fourth RFIC 228, the first RFFE 232, and the second RFFE 234 may form at least part of a wireless communication module 192. According to an embodiment, the fourth RFIC 228 may be omitted or may be included as part of the third RFIC 226.

The first communication processor 212 may establish a communication channel of a band to be used for wireless communication with the first cellular network 292, and may support legacy network communication via the established communication channel. According to various embodiments, the first cellular network 292 may be a legacy network including a second generation (2G), 3G, 4G, or long term evolution (LTE) network. The second communication processor 214 may establish a communication channel corresponding to a designated band (for example, about 6 GHz to about 60 GHz) among bands to be used for wireless communication with the second cellular network 294, and may support 5G network communication via the established communication channel. According to various embodiments, the second cellular network 294 may be a 5G network which is defined in 3GPP. Additionally, according to an embodiment, the first communication processor 212 or the second communication processor 214 may establish a communication channel corresponding to another designated band (for example, about 6 GHz or lower) among the bands to be used for wireless communication with the second cellular network 294, and may support 5G network communication via the established communication channel. According to an embodiment, the first communication processor 212 and the second communication processor 214 may be implemented within a single chip or a single package. According to various embodiments, the first communication processor 212 or the second communication processor 214 may be formed within a single chip or a single package, with the processor 120, the auxiliary processor 123, or the communication module 190.

When transmitting signals, the first RFIC 222 may convert a baseband signal, which is generated by the first communication processor 212, into a radio frequency (RF) signal of about 700 MHz to about 3 GHz to be used in the first cellular network 292 (for example, a legacy network). When signals are received, an RF signal may be acquired from the first cellular network 292 (for example, the legacy network) via an antenna (for example, the first antenna module 242), and may be pre-processed through an RFFE (for example, the first RFFE 232). The first RFIC 222 may convert the pre-processed RF signal into a baseband signal to be processed by the first communication processor 212.

When transmitting signals, the second RFIC 224 may convert a baseband signal, which is generated by the first communication processor 212 or the second communication processor 214, into an RF signal (hereinafter, a 5G Sub6 RF signal) of a Sub6 band (for example, about 6 GHz or lower) to be used in the second cellular network 294 (for example, a 5G network). When signals are received, a 5G Sub6 RF signal may be acquired from the second cellular network 294 (for example, the 5G network) via an antenna (for example, the second antenna module 244), and may be pre-processed through an RFFE (for example, the second RFFE 234). The second RFIC 224 may convert the pre-processed 5G Sub6 RF signal into a baseband signal to be processed by a corresponding communication processor among the first communication processor 212 or the second communication processor 214.

The third RFIC 226 may convert a baseband signal, which is generated by the second communication processor 214, into an RF signal (hereinafter, a 5G Above6 RF signal) of a 5G Above6 band (for example, about 6 GHz to about 60 GHz) to be used in the second cellular network 294 (for example, the 5G network). When signals are received, a 5G Above6 RF signal may be acquired from the second cellular network 294 (for example, the 5G network) via an antenna (for example, the antenna 248), and may be pre-processed through the third RFFE 236. The third RFIC 226 may convert the pre-processed 5G Above6 RF signal into a baseband signal to be processed by the second communication processor 214. According to an embodiment, the third RFFE 236 may be formed as part of the third RFIC 226.

According to an embodiment, the electronic device 101 may include the fourth RFIC 228 separately from or as part of the third RFIC 226. In this case, the fourth RFIC 228 may convert a baseband signal, which is generated by the second communication processor 214, into an RF signal of an intermediate frequency band (for example, about 9 GHz to about 11 GHz) (hereinafter, an IF signal), and then may transfer the IF signal to the third RFIC 226. The third RFIC 226 may convert the IF signal into a 5G Above6 RF signal. When signals are received, a 5G Above6 RF signal may be received from the second cellular network 294 (for example, the 5G network) via an antenna (for example, the antenna 248), and may be converted into an IF signal by the third RFIC 226. The fourth RFIC 228 may convert the IF signal into a baseband signal to be processed by the second communication processor 214.

According to an embodiment, the first RFIC 222 and the second RFIC 224 may be implemented as part of a single chip or single package. According to an embodiment, the first RFFE 232 and the second RFFE 234 may be implemented as part of a single chip or a single package. According to an embodiment, at least one antenna module of the first antenna module 242 or the second antenna module 244 may be omitted, or may be coupled with another antenna module to process RF signals of a plurality of corresponding frequency bands.

According to an embodiment, the third RFIC 226 and the antenna 248 may be disposed on the same substrate to form a third antenna module 246. For example, the wireless communication module 192 or the processor 120 may be disposed on a first substrate (for example, a main PCB). In this case, the third antenna module 246 may be formed by the third RFIC 226 being disposed on an area (for example, a lower surface) of a second substrate (for example, a sub PCB) separate from the first substrate, and the antenna 248 being disposed on another area (for example, an upper surface). The third RFIC 226 and the antenna 248 may be disposed on the same substrate, so that a length of a transmission line therebetween may be reduced. This may reduce loss (for example, attenuation) of a signal of a high frequency band (for example, about 6 GHz to about 60 GHz) used for 5G network communication, which is caused by a transmission line. Accordingly, the electronic device 101 may enhance quality or speed of communication with the second cellular network 294 (for example, the 5G network).

According to an embodiment, the antenna 248 may be formed as an antenna array including a plurality of antenna elements to be used for beamforming. In this case, the third RFIC 226 may include a plurality of phase shifters 238 corresponding to the plurality of antenna elements, as part of the third RFFE 236. When transmitting signals, the plurality of phase shifters 238 may shift phases of 5G Above6 RF signals to be transmitted to the outside (for example, a base station of the 5G network) of the electronic device 101 via corresponding antenna elements. When receiving signals, the plurality of phase shifters 238 may shift phases of 5G Above6 RF signals received from the outside through corresponding antenna elements to the same phases or substantially the same phases. This makes it possible to transmit or receive through beamforming between the electronic device 101 and the outside.

The second cellular network 294 (for example, the 5G network) may be operated independently from the first cellular network 292 (for example, the legacy network) (for example, stand-alone (SA)), or may be operated in conjunction therewith (for example, non-stand alone (NSA)). For example, the 5G network may include only an access network (for example, a 5G radio access network (RAN) or a next generation RAN (NG RAN)), and may not include a core network (for example, a next generation core (NGC)). In this case, after accessing the access network of the 5G network, the electronic device 101 may access an external network (for example, Internet) under control of the core network (for example, an evolved packed core (EPC)) of the legacy network. Protocol information (for example, LTE protocol information) for communication with the legacy network or protocol information (for example, new radio (NR) protocol information) for communication with the 5G network may be stored in the memory 230, and may be accessed by other components (for example, the processor 120, the first communication processor 212, or the second communication processor 214).

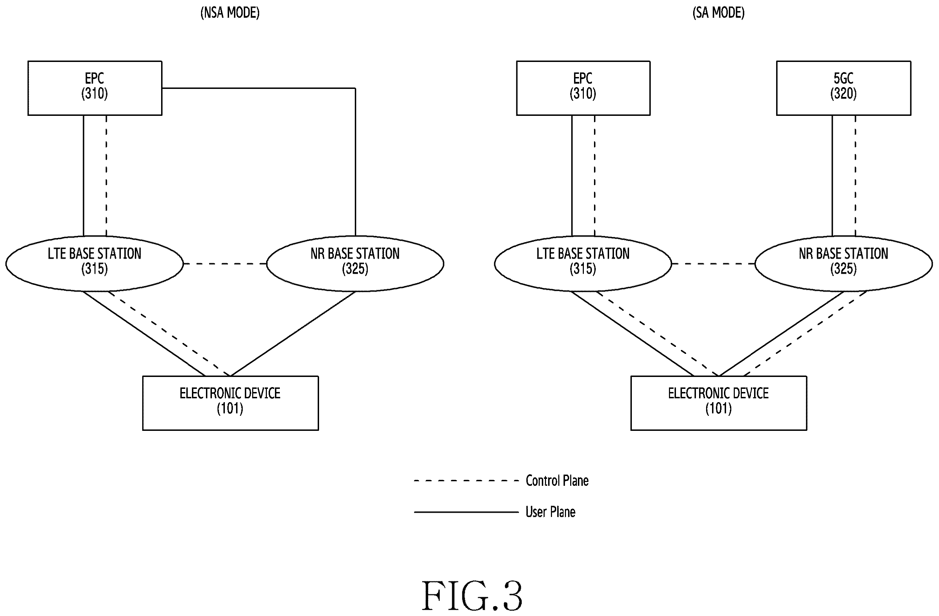

FIG. 3 is a diagram illustrating an NSA mode and a SA mode of a 5G network according to various embodiments.

According to various embodiments, a wireless communication system may include at least one of a legacy network and a 5G network. The legacy network may include, for example, a 4G or LTE base station 315 (for example, an eNodeB (eNB)) of 3GPP standards which supports radio access to an electronic device 101, and an evolved packet core (EPC) 310 which manages 4G communication. The 5G network may include, for example, a new radio (NR) base station 325 (for example, gNodeB (gNB)) which supports radio access to an electronic device 101, and a 5^{th} generation core (5GC) 320 which manages 5G communication of the electronic device 101.

According to various embodiments, an electronic device 101 may transmit and receive a control message and user data through legacy communication and/or 5G communication. The control message may include, for example, a message related to at least one of security control, bearer setup, authentication, registration, or mobility management of the electronic device 101. The user data may refer to, for example, user data that is transmitted and received between the electronic device 101 and a core network (for example, the EPC 310, the 5GC 320), except for the control message.

In FIG. 3, the 5G network may provide an NSA mode in which legacy communication and 5G communication are merged and used, and/or a SA mode in which only 5G communication is independently used. According to various embodiments, in the NSA mode, the network may connect the LTE base station 315 and the NR base station 325 to the EPC 310 which is a core network of an existing legacy network, and may provide data exchange. For example, the electronic device 101 and the EPC 310 may process an operation of a control plane which is responsible for mobility of user equipment through the LTE base station 315, and may exchange data traffic corresponding to a user plane through the 5G network.

According to various embodiments, in the SA mode, the network may provide data transmission and reception independently. For example, the electronic device 101 and the 5GC 320 may process both an operation of a control plane and an operation of a user plane through the NR base station 325.

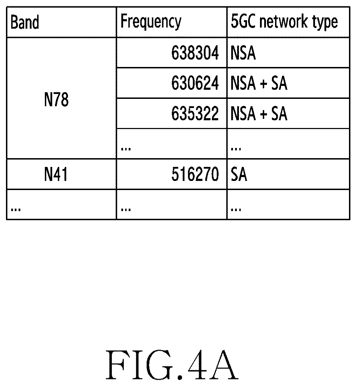

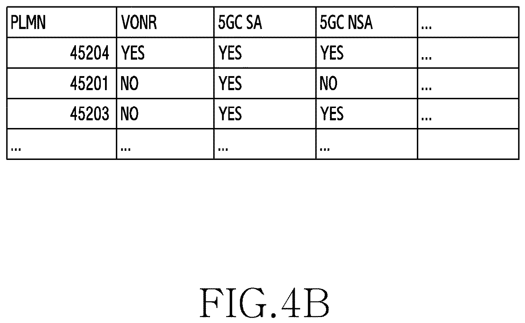

FIG. 4A is a is a diagram illustrating example information regarding network types which are supported by band/frequency of a network according to various embodiments, and FIG. 4B is diagram illustrating example information regarding whether a VoNR/SA mode/NSA mode of a network is supported according to various embodiments.

According to various embodiments, an electronic device 101 may acquire, from a network or a database managing data related to the network, information regarding network types which are supported by band/frequency included in the network as shown in FIG. 4A, and/or information regarding whether a VoNR/SA mode/NSA mode is supported in the network as shown in FIG. 4B. For example, the electronic device 101 may acquire the information directly from the network, and may update the information every time software is refined. In another example, the electronic device 101 may acquire the information from the network through an over the air (OTA) message, or may collect and update the information from the database.

According to various embodiments, when an NR measurement setup is received from the network, the electronic device 101 may determine which network type a NR frequency set by the NR measurement setup is used for, based on the information of FIG. 4A. For example, when frequency 630624 of band N78 is set by the NR measurement setup received from the network, the electronic device 101 may identify that the corresponding band/frequency is usable for the NSA mode and the SA mode.

According to various embodiments, when the NR measurement setup is received from the network, the electronic device 101 may determine whether the network supports VoNR, whether the network supports the SA mode, or whether the network supports the NSA mode, based on the information of FIG. 4B. For example, when a public land mobile network (PLMN) corresponding to the network is 45203, the electronic device 101 may identify that the network does not support VoNR and supports the SA mode and the NSA mode.

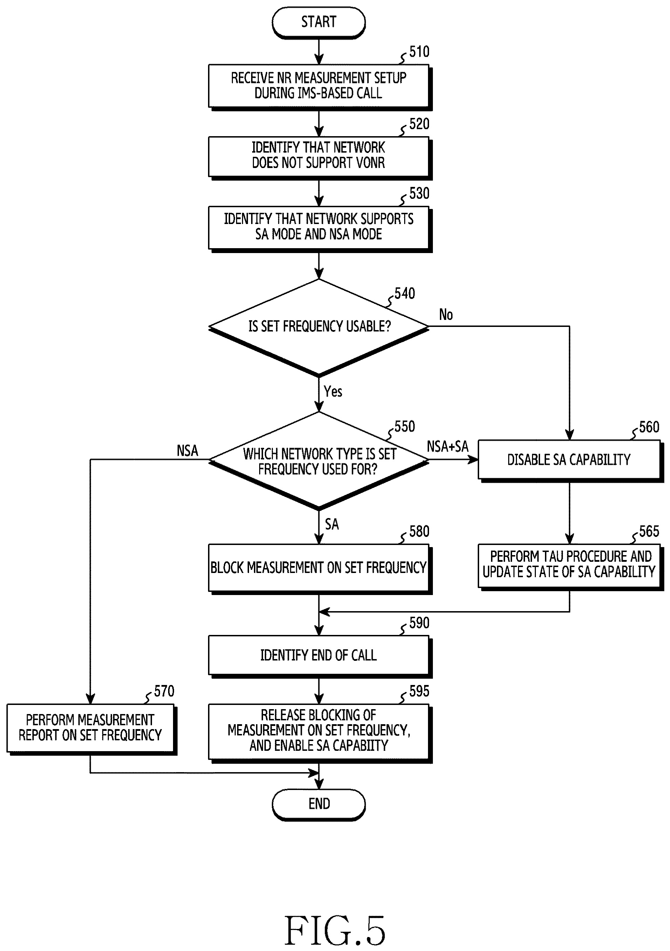

FIG. 5 is a flowchart illustrating an example method for enhancing quality of calls in a wireless communication system according to various embodiments.

In a wireless communication, a network may be implemented in two methods of an NSA mode and a SA mode to provide 5G communication. For example, the network may transmit a measurement setup regarding a 5G NSA cell while user equipment (for example, the electronic device 101) is being positioned at an LTE cell, and, when a signal of the 5G NSA cell reported by the user equipment satisfies a designated condition, the network may implement the NSA mode by adding the corresponding 5G NSA cell to an E-UTRA new radio dual connectivity (ENDC) cell. In another example, the network may transmit a measurement setup regarding a 5G SA cell while user equipment is being positioned at an LTE cell, and, when a measurement result of the 5G SA cell reported by the user equipment satisfies a designated condition, the network may implement the SA mode by allowing the user equipment to perform handover to the corresponding 5G SA cell. According to various embodiments, the network may use events of the same type (for example, A2, B1, B2) for a measurement setup in a process of implementing a 5G NSA mode and a 5G SA mode. However, user equipment may not distinguish between a measurement setup for adding a 5G NSA cell and a measurement setup for handover to a 5G SA cell, and hence may not perform 5G cell measurement in a specific situation. For example, when the network does not support 5G-based voice calls (for example, VoNR) in 5G SA, user equipment may block 5G cell measurement while an LTE-based voice call (for example, VoLTE) is being connected, and accordingly, a 5G NSA service may be interrupted. In addition, when the network does not support 5G-based voice calls in 5G SA and user equipment which is on an LTE-based voice call moves from an LTE cell to a 5G SA cell (handover), a call drop may occur. To address this problem, the disclosure provides a method and apparatus for enhancing quality of calls by preventing sudden handover to a 5G SA cell during an LTE-based voice call, and blocking unnecessary 5G cell measurement.

Referring to FIG. 5, in operation 510, the electronic device 101 may receive a NR measurement setup from a network while connecting an IP multimedia subsystem (IMS)-based voice call with an external terminal (for example, the electronic device 104 of FIG. 1). The NR measurement setup may include a message related to 5G frequency measurement.

In operation 520, the electronic device 101 may identify that the network does not support VoNR. When the NR measurement setup is received from the network, the electronic device 101 may determine that the network does not support VoNR based on information regarding whether the network supports VoNR. The information regarding whether the network supports VoNR may be acquired from the network or a database which manages data related to the network.

In operation 530, the electronic device 101 may identify that the network supports a SA mode and an NSA mode. When the NR measurement setup is received from the network, the electronic device 101 may determine that the network supports both the SA mode and the NSA mode, based on information regarding whether the network supports the SA mode and information regarding whether the network supports the NSA mode. The information regarding whether the network supports the SA mode and the information regarding whether the network supports the NSA mode may be acquired from the network or the database which manages data related to the network.

In operation 540, the electronic device 101 may identify whether a frequency set by the NR measurement setup is usable. The electronic device 101 may determine whether the frequency set by the NR measurement setup is usable, based on information regarding network types supported by band and frequency of the network. The electronic device 101 may acquire the information regarding the network types supported by band and frequency of the network from the network or the database which manages the data related to the network.

When the set frequency is usable as a result of identifying in operation 540 (Yes in operation 540), the electronic device 101 may identify which network type the set frequency is used for in operation 550. The electronic device 101 may match the set frequency with information regarding network types supported by band and frequency of the network, and may determine which network type of the SA mode, the NSA+SA mode, or the NSA mode the set frequency is used for. When it is determined that the set frequency is used for the SA mode as a result of identifying in operation 550 (action 550-SA), the electronic device 101 may block measurement on the set frequency in operation 580. When the set frequency is used for the SA mode and handover to a corresponding cell is performed, a call drop may occur, and hence, the electronic device 101 may determine that measurement on the set frequency and report are not necessary while connecting the voice call with an external terminal, and may not perform measurement and report.

When it is determined that the set frequency is used for the NSA mode and the SA mode as a result of identifying in operation 550 (operation 550-NSA+SA), the electronic device 101 may disable a SA capability (for example, N1 mode) in operation 560. When the SA capability is disabled, the electronic device 101 may trigger a tracking area update (TAU) procedure and may update a state of the disabled SA capability for the network in operation 565. The state of the disabled SA capability may be maintained while a voice call between the electronic device 101 and the external terminal is being connected.

When it is determined that the set frequency is used for the NSA mode as a result of identifying in operation 550 (operation 550-NSA), the electronic device 101 may report on measurement on the set frequency in operation 570. When a measurement result of a corresponding cell reported by the electronic device 101 satisfies a designated condition, the corresponding cell may be added to the ENDC cell. Accordingly, the electronic device 101 may continuously receive a 5G NSA service while maintaining an LTE-based voice call.

When the set frequency is not usable as a result of identifying in operation 540 (No in operation 540), the electronic device 101 may disable the SA capability (for example, N1 mode) in operation 560, and may trigger the tracking area update (TAU) procedure and update a state of the disabled SA capability for the network in operation 565.

In operation 590, the electronic device 101 may identify that the IP multimedia subsystem (IMS)-based voice call with the external terminal is ended. When the voice call is ended, the electronic device 101 may release blocking of the measurement on the set frequency and may change the SA capability from the disabled state to an enabled state in operation 595. After action 595, the electronic device 101 may perform handover to a 5G SA cell and cell reselection.

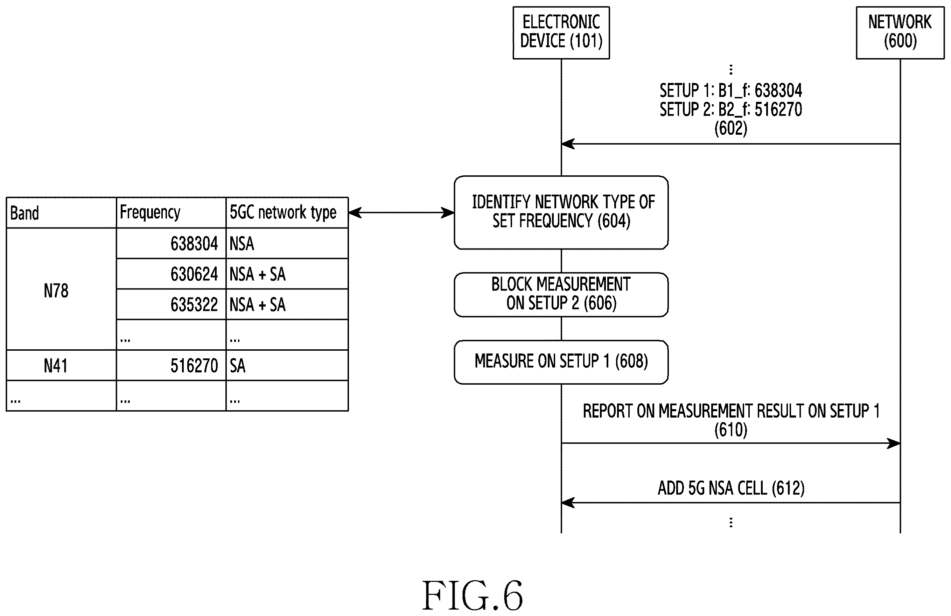

FIG. 6 is a signal flow diagram illustrating an example method of processing a measurement setup received from a network according to various embodiments.

Referring to FIG. 6, in operation 602, the electronic device 101 may receive an NR measurement setup including setup 1 and setup 2 from a network 600 while connecting an LTE-based voice call with an external terminal. When the NR measurement setup is received, the electronic device 101 may identify that the network 600 does not support 5G-based voice calls (for example, VoNR) and supports a SA mode and an NSA mode.

In operation 604, the electronic device 101 may identify a network type of a frequency which is set by the NR measurement setup. The electronic device 101 may identify a network type of the set frequency by matching the set frequency with information (for example, information regarding network types supported by band/frequency as shown in FIG. 4A), which is acquired from the network 600 or a database managing data related to the network. For example, the electronic device 101 may determine that frequency 638304 set by setup 1 of the NR measurement setup is used for the NSA mode, based on the information. In another example, the electronic device 101 may determine that frequency 516270 set by setup 2 of the NR measurement setup is used for the SA mode, based on the information.

In operation 606, the electronic device 101 may block frequency measurement on setup 2 in which the network type of the frequency is the SA mode. When frequency measurement on setup 2 is blocked, the electronic device 101 may not measure frequency 516270 while connecting a voice call with the external terminal, and accordingly, power consumption of the electronic device 101 may be reduced while preventing and/or reducing a call drop. When it is identified that the voice call is ended, the electronic device 101 may release blocking of frequency measurement on setup 2.

In operation 608, the electronic device 101 may perform frequency measurement on setup 1 in which the network type of the frequency is the NSA mode. In action 610, the electronic device 101 may report on a measurement result on frequency 638304 of setup 1 to the network 600. The network 600 may determine whether the measurement result of setup 1 reported by the electronic device 101 satisfies a designation condition. When the measurement result of setup 1 satisfies the designated condition as a result of determining, the network 600 may add a 5G NSA cell in operation 612. Accordingly, a 5G NSA service may be maintained even during an LTE-based voice call between the electronic device 101 and the external terminal.

According to various embodiments, when it is identified that the frequency set by the NR measurement setup is usable for both the SNA mode and the SA mode, the electronic device 101 may disable a SA capability, and may trigger a TAU procedure and may update a state of the disabled SA capability (for example, N1 mode) for the network 600. The disabled SA capability may be maintained while a voice call with the external terminal is being connected, and, when the voice call is ended, the SA capability may be enabled again.

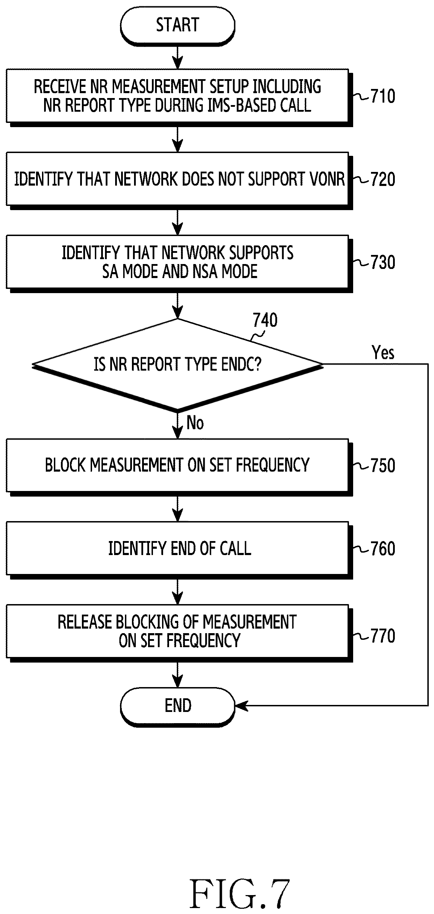

FIG. 7 is a flowchart illustrating an example method for enhancing quality of calls by blocking SA frequency measurement based on an NR report type included in an NR measurement setup in a wireless communication system according to various embodiments.

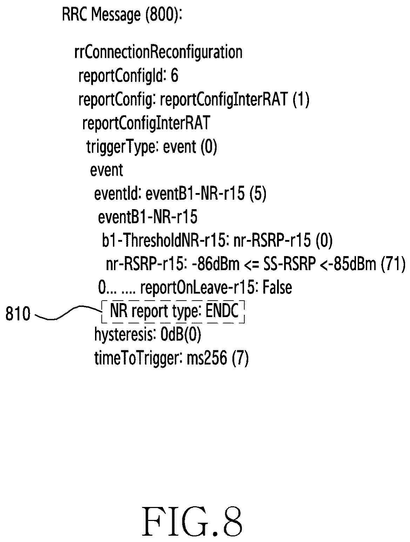

Referring to FIG. 7, in operation 710, the electronic device 101 may receive an NR measurement setup including an NR report type from a network while connecting an IP multimedia subsystem (IMS)-based voice call with an external terminal (for example, the electronic device 104 of FIG. 1). The NR measurement setup may be received in the form of a radio resource control (RRC) message as shown in greater detail below with reference to FIG. 8.

In operation 720, the electronic device 101 may identify that the network does not support VoNR. When the NR measurement setup is received from the network, the electronic device 101 may determine that the network does not support VoNR, based on information regarding whether the network supports VoNR. The information regarding whether the network supports VoNR may be acquired from the network or a database managing data related to the network.

In operation 730, the electronic device 101 may identify that the network supports a SA mode and an NSA mode. When the NR measurement setup is received from the network, the electronic device 101 may determine that the network supports both the SA mode and the NSA mode, based on information regarding whether the network supports the SA mode and information regarding whether the network supports the NSA mode. The information regarding whether the network supports the SA mode and the information regarding whether the network supports the NSA mode may be acquired from the network or the database managing the data related to the network.

In operation 740, the electronic device may identify an NR report type included in the NR measurement setup. An example method for identifying the NR report type will be described in greater detail below with reference to FIG. 8. A RRC message 800 illustrated in FIG. 8 may include an indication 810 related to an NR report type. For example, when the NR report type of the RRC message 800 is an ENDC, the electronic device 101 may determine that the NR measurement setup is for adding a 5G NSA cell. In another example, when the NR report type of the RRC message 800 is a SA (that is, not the ENDC), the electronic device 101 may determine that the NR measurement setup is for handover to a 5G SA cell.

Referring back to FIG. 7, when the NR report type is the ENDC as a result of identifying in operation 740 (Yes in operation 740), the process may be terminated.

When the NR report type is not the ENDC as a result of identifying in operation 740 (No in operation 740), the electronic device 101 may block measurement on a frequency set by the NR measurement setup in operation 750. The electronic device 101 may block measurement on the set frequency while connecting the voice call with the external terminal, so that a call drop caused by handover to a 5G SA cell which does not support VoNR may be prevented and/or reduced during the voice call with the external terminal.

In operation 760, the electronic device 101 may identify that the IP multimedia subsystem (IMS)-based voice call with the external terminal is ended. When the voice call is ended, the electronic device 101 may release blocking of the measurement on the set frequency in operation 770.

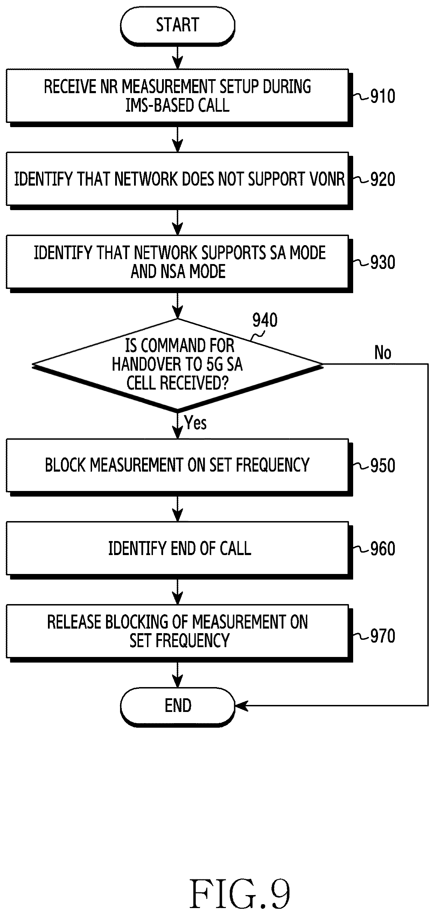

FIG. 9 is a flowchart illustrating an example method for enhancing quality of calls by blocking SA frequency measurement when a handover command is received in a wireless communication system according to various embodiments.

Referring to FIG. 9, in operation 910, the electronic device 101 may receive an NR measurement setup from a network while connecting an IP multimedia subsystem (IMS)-based voice call with an external terminal (for example, the electronic device 104 of FIG. 1).

In operation 920, the electronic device 101 may identify that the network does not support VoNR. When the NR measurement setup is received from the network, the electronic device 101 may determine that the network does not support VoNR, based on information regarding whether the network supports VoNR. The information regarding whether the network supports VoNR may be acquired from the network or a database managing data related to the network.

In operation 930, the electronic device 101 may identify that the network supports a SA mode and an NSA mode. When the NR measurement setup is received from the network, the electronic device 101 may determine that the network supports both the SA mode and the NSA mode, based on information regarding whether the network supports the SA mode and information regarding whether the network supports the NSA mode. The information regarding whether the network supports the SA mode and the information regarding whether the network supports the NSA mode may be acquired from the network or the database managing the data related to the network.

In operation 940, the electronic device 101 may identify whether a command for handover to a 5G SA cell is received from the network. When the command for handover to the 5G SA cell is not received as a result of identifying in operation 940 (No in operation 940), the process may be terminated.

When the command for handover to the 5G SA cell is received as a result of identifying in operation 940 (Yes in operation 940), the electronic device 101 may block measurement on a frequency set by the NR measurement setup in operation 950. The electronic device 101 may block handover to the 5G SA cell and may prevent and/or reduce a call drop during a voice call with the external terminal by blocking measurement on the set frequency while connecting the voice call with the external terminal.

In operation 960, the electronic device 101 may identify that the IP multimedia subsystem (IMS)-based voice call with the external terminal is ended. When the voice call is ended, the electronic device 101 may release blocking of the measurement on the set frequency in operation 970.

According to various example embodiments, a method for enhancing quality of calls in a wireless communication system may include: receiving a new radio (NR) measurement setup from a network while connecting an IP multimedia subsystem (IMS)-based voice call with an external terminal; based on the network not supporting voice over new radio (VoNR) and supporting a standalone (SA) mode and a non-standalone (NSA) mode, determining whether a frequency set by the NR measurement setup is usable and determining a network type of the set frequency; and, based on determining that the set frequency is used for the SA mode, blocking measurement on the set frequency.

According to various example embodiments, the method may further include: acquiring at least one of information regarding network types which are supported by band and frequency of the network, information regarding whether the network supports VoNR, information regarding whether the network supports the SA mode, and information regarding whether the network supports the NSA mode.

According to various example embodiments, determining whether the set frequency is usable and determining the network type of the set frequency may include: determining whether the set frequency is usable based on the at least one piece of information; and, based on the set frequency being usable, determining which network type the set frequency is used for, based on the at least one piece of information.

According to various example embodiments, the method may further include: based on determining that the set frequency is used for the SA mode and the NSA mode, disabling a SA capability; and performing a tracking area update (TAU) procedure and updating a state of the disabled SA capability for the network.

According to various example embodiments, the method may further include, based on determining that the set frequency is used for the NSA mode, performing a measurement report on the frequency.

According to various example embodiments, the method may further include: based on identifying that the set frequency is not usable, disabling a SA capability; and performing a TAU procedure and updating a state of the disabled SA capability for the network.

According to various example embodiments, the NR measurement setup may include an NR report type, and the method may further include, based on identifying that the NR report type is not an E-UTRA NR dual connectivity (ENDC), blocking measurement on the set frequency.

According to various example embodiments, the method may further include, based on identifying that the NR report type is the ENDC, performing a measurement report on the set frequency.

According to various example embodiments, the method may further include: receiving a command for handover to a 5G SA cell from the network; and blocking measurement on the set frequency in response to the command for handover being received.

According to various example embodiments, the method may further include, based on identifying that the voice call is ended, releasing the blocking of the measurement on the set frequency and enabling the SA capability.

According to various example embodiments, an apparatus (for example, the electronic device 101) for enhancing quality of calls in a wireless communication system may include: a transceiver (for example, the wireless communication module 192); and at least one processor, comprising processing circuitry, (for example, the processor 120) operatively connected with the transceiver. At least one processor, individually and/or collectively, may be configured to: receive a new radio (NR) measurement setup from a network while connecting an IP multimedia subsystem (IMS)-based voice call with an external terminal; based on the network not supporting voice over new radio (VoNR) and supporting a standalone (SA) mode and a non-standalone (NSA) mode, determine whether a frequency set by the NR measurement setup is usable and determine a network type of the set frequency; and, based on determining that the set frequency is used for the SA mode, block measurement on the set frequency.

According to various example embodiments, at least one processor, individually and/or collectively, may be configured to acquire at least one of information regarding network types which are supported by band and frequency of the network, information regarding whether the network supports VoNR, information regarding whether the network supports the SA mode, and information regarding whether the network supports the NSA mode.

According to various example embodiments, at least one processor, individually and/or collectively, may be configured to: determine whether the set frequency is usable based on the at least one piece of information; and, based on the set frequency being usable, determine which network type the set frequency is used for, based on the at least one piece of information.

According to various example embodiments, at least one processor, individually and/or collectively, may be configured to: based on determining that the set frequency is used for the SA mode and the NSA mode, disable a SA capability; and perform a tracking area update (TAU) procedure and update a state of the disabled SA capability for the network.

According to various example embodiments, at least one processor, individually and/or collectively, may be configured to, based on determining that the set frequency is used for the NSA mode, perform a measurement report on the frequency.

According to various example embodiments, at least one processor, individually and/or collectively, may be configured to: based on identifying that the set frequency is not usable, disable a SA capability; and perform a TAU procedure and update a state of the disabled SA capability for the network.

According to various example embodiments, the NR measurement setup may include an NR report type, and at least one processor, individually and/or collectively, may be configured to, based on identifying that the NR report type is not an E-UTRA NR dual connectivity (ENDC), block measurement on the set frequency.

According to various example embodiments, at least one processor, individually and/or collectively, may be configured to, based on identifying that the NR report type is the ENDC, perform a measurement report on the set frequency.

According to various example embodiments, at least one processor, individually and/or collectively, may be configured to: receive a command for handover to a 5G SA cell from the network; and block measurement on the set frequency in response to the command for handover being received.

According to various example embodiments, at least one processor, individually and/or collectively, may be configured to, based on identifying that the voice call is ended, release the blocking of the measurement on the set frequency and enable the SA capability.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. A method for enhancing quality of calls in a wireless communication system, the method comprising:
receiving a new radio (NR) measurement setup from a network while connecting an IP multimedia subsystem (IMS)-based voice call with an external terminal;
based on the network not supporting voice over new radio (VoNR) and supporting a standalone (SA) mode and a non-standalone (NSA) mode, determining whether a frequency set by the NR measurement setup is usable and determining a network type of the set frequency; and
based on determining that the set frequency is used for the SA mode, blocking measurement on the set frequency.

2. The method of claim 1, further comprising: acquiring at least one of information regarding network types supported by band and frequency of the network, information regarding whether the network supports VoNR, information regarding whether the network supports the SA mode, and information regarding whether the network supports the NSA mode.

3. The method of claim 2, wherein determining whether the set frequency is usable and determining the network type of the set frequency comprises:
determining whether the set frequency is usable based on the at least one piece of information; and
based on the set frequency being usable, determining which network type the set frequency is used for, based on the at least one piece of information.

4. The method of claim 1, further comprising:
based on determining that the set frequency is used for the SA mode and the NSA mode, disabling a SA capability; and
performing a tracking area update (TAU) procedure and updating a state of the disabled SA capability for the network.

5. The method of claim 1, further comprising, based on determining that the set frequency is used for the NSA mode, performing a measurement report on the frequency.

6. The method of claim 1, further comprising:
based on identifying that the set frequency is not usable, disabling a SA capability; and
performing a TAU procedure and updating a state of the disabled SA capability for the network.

7. The method of claim 1, wherein the NR measurement setup comprises an NR report type, and
wherein the method further comprises, based on identifying that the NR report type is not an evolved universal terrestrial radio access (E-UTRA) NR dual connectivity (ENDC), blocking measurement on the set frequency.

8. The method of claim 7, further comprising, based on identifying that the NR report type is the ENDC, performing a measurement report on the set frequency.

9. The method of claim 1, further comprising:
receiving a command for handover to a 5G SA cell from the network; and
blocking measurement on the set frequency in response to the command for handover being received.

10. The method of claim 1, further comprising, based on identifying that the voice call is ended, releasing the blocking of the measurement on the set frequency and enabling the SA capability.

11. An apparatus for enhancing quality of calls in a wireless communication system, the apparatus comprising:
a transceiver; and
at least one processor, comprising processing circuitry, operatively connected with the transceiver,
wherein the at least one processor is configured to:
receive a new radio (NR) measurement setup from a network while connecting an IP multimedia subsystem (IMS)-based voice call with an external terminal;
based on the network not supporting voice over new radio (VoNR) and supporting a standalone (SA) mode and a non-standalone (NSA) mode, determine whether a frequency set by the NR measurement setup is usable and determine a network type of the set frequency; and
based on determining that the set frequency is used for the SA mode, block measurement on the set frequency.

12. The apparatus of claim 11, wherein the at least one processor is configured to:
acquire at least one of information regarding network types which are supported by band and frequency of the network, information regarding whether the network supports VoNR, information regarding whether the network supports the SA mode, and information regarding whether the network supports the NSA mode;
determine whether the set frequency is usable based on the at least one piece of information; and
based on the set frequency being usable, determine which network type the set frequency is used for, based on the at least one piece of information.

13. The apparatus of claim 11, wherein the at least one processor is configured to:
based on determining that the set frequency is used for the SA mode and the NSA mode, disable a SA capability; and
perform a tracking area update (TAU) procedure and update a state of the disabled SA capability for the network.

14. The apparatus of claim 11, wherein the at least one processor is configured to, based on determining that the set frequency is used for the NSA mode, perform a measurement report on the frequency.

15. The apparatus of claim 11, wherein the at least one processor is configured to:
based on identifying that the set frequency is not usable, disable a SA capability; and
perform a TAU procedure and update a state of the disabled SA capability for the network.
